# DEMANDE DE BREVET EUROPEEN

(11) **EP 0 534 288 A1**
(43) Date de publication de la demande: **31.03.1993**
(21) Numéro de dépôt: 92115787.1
(22) Date de dépôt: 16.09.1992
(51) Int. Cl.: G01B 11/02, G01B 11/12, G01B 11/30

(54) **Dispositif opto-électronique de mesure de dimensions**

(30) Priorité: 26.09.1991 CH 2861/91
(71) Demandeur: TESA S.A., 1020 Renens (CH)
(72) Inventeur: Kerner, Martin, CH-3116 Kirchdorf (CH); Lendi, Georges, CH-1023 Crissier (CH)
(74) Mandataire: Misrachi, Alfred

(57) **Abrégé**

Le dispositif comporte, situées en positions relatives fixes dans un boîtier (9) et centrées sur un axe optique (X), une source (1) de rayons (2), une optique (3) composée d'un collimateur (4) et d'une grille transparente (5) à réseau de phases de constante donnée produisant un faisceau bidirectionnel conique (6), en soi parallèle, et d'angle d'ouverture (A) constant, et une règle de mesure circulaire (7) constituée par un réseau d'éléments récepteurs photosensibles (8) de type différentiel, de constante (C) proportionnelle à celle de la grille, ces éléments récepteurs étant reliés individuellement par un câble (14) au circuit d'un calculateur. Par analyse de la trace des rayons reflétés par la surface d'un objet (15) sur les éléments récepteurs (8) de la règle (7), la distance de cet objet au dispositif peut être mesurée ainsi que la forme et/ou l'état de sa surface.

## Description

La présente invention a pour objet un dispositif opto-électronique de mesure de dimensions comprenant une source de rayons électromagnétiques, une optique pour calibrer les rayons en provenance de la source, une règle graduée irradiée par les rayons calibrés, et des éléments récepteurs photosensibles destinés à être reliés à un circuit électronique ayant pour fonction de quantifier la mesure par exploitation des effets de l'irradiation de la règle sur eux.

Des dispositifs connus comprenant de tels éléments sont notamment utilisés pour la mesure et le contrôle dimensionnel de pièces usinées. Selon le type et la destination de l'appareil de mesure qu'ils équipent, leurs éléments sont arrangés de manières différentes.

Ainsi, sur un calibre à coulisse décrit dans le document CH-623 411, une règle transparente graduée reliée à une touche mobile de palpage est placée à l'intérieur du corps de cet instrument entre une source fixe de rayons et un ensemble fixe constitué par un réticule transparent de calibrage des rayons de la source et un récepteur à cellules réceptrices photosensibles centrés sur l'axe optique de la source, la règle et le réticule étant marqués de réseaux de traits alternés d'opacité différente de pas identique ou proportionnel.

Sur une colonne de mesure de hauteurs décrite dans le document CH-667 726, dont le dispositif opto-électronique comporte des éléments semblables, la règle graduée est fixée à la colonne et la source d'une part et le réticule et le récepteur à cellules réceptrices photosensibles d'autre part sont solidaires d'un chariot portant une touche de palpage, monté mobile le long de la colonne et de la règle.

Dans ces deux types d'appareil de mesure, le dispositif opto-électronique délivre un signal électrique représentatif de l'amplitude et du sens du déplacement relatif entre la règle et le récepteur à cellules photosensibles. Le signal délivré sous forme de trains d'impulsions est généré par les effets de contrastes alternés produits sur les cellules réceptrices photosensibles par le défilement relatif des graduations de la règle et du réticule de calibrage.

Avec ces appareils, les prises de mesure exigent la mise en contact de la touche de mesure avec la pièce à mesurer, celle-ci étant soit prise entre une touche mobile et une touche fixe comme avec le calibre à coulisse, soit fixée sur une table plane de référence comme avec la colonne de mesure.

Dans un autre arrangement des éléments du dispositif opto-électronique, la source, le réticule de calibrage et le récepteur à cellules photosensibles sont placés d'un même côté de la règle dans un plan de réflexion tel que les rayons en provenance de la source sont réfléchis par la règle sur le récepteur et au travers du réticule de calibrage.

Dans un dispositif de ce genre, décrit dans le document CH-646 514, qui est utilisé pour détecter les déplacements relatifs de deux objets, l'un de ceux-ci utilisé comme règle, comporte une surface réfléchissante de granulation quelconque régulière, et la source, le réticule de calibrage et le récepteur sont disposés dans des positions relatives fixes dans un boîtier comportant un élément de positionnement destiné à le maintenir à hauteur constante de la surface réfléchissante de la règle.

Ce dispositif, basé sur des données expérimentales relatives aux caractères particuliers de l'image résultant de la superposition de l'ombre portée du réseau du réticule et de l'albédo de la surface réfléchissante de la règle sur le récepteur, a été conçu pour permettre la mesure directe et in situ des déplacements d'un nombre important de pièces mécaniques d'une machine quelconque, telle que par exemple la tige d'un vérin de positionnement d'un outil ou la périphérie d'une roue, ces pièces étant utilisées en qualité de règle à surface réfléchissante du dispositif.

Du fait de cet arrangement, il n'est pas nécessaire ici de contacter la pièce dont on veut mesurer le déplacement et la mesure est de type sans contact.

La mesure sans contact, non plus d'un déplacement mais d'une distance entre un capteur optique et un objet au moyen d'ondes électromagnétiques, se fait de manière connue par application de méthodes de triangulation.

Lors d'une triangulation dans laquelle la réflexion d'un rayon incident a lieu sur l'objet à mesurer, l'angle de réflexion et ainsi l'angle de triangulation sont influencés par la forme de la surface de l'objet.

Les progrès en technologie de miniaturisation des composants opto-électroniques permettent, par l'amélioration de la résolution qui en résulte, une application dans le domaine des mesures fines. Mais ces progrès n'apportent pas une solution en soi aux problèmes soulevés par l'înfluence de l'état de la surface de l'objet à mesurer sur l'angle de réflexion du rayon incident.

Ces problèmes apparaissent lorsque la surface de l'objet change, c'est-à-dire par exemple lorsque les surfaces d'une série d'objets ne sont pas les mêmes en ce qui concerne leur degré de réflexion et leur structure de surface.

Les surfaces réalisées par enlèvement de copeaux présentent normalement une structure périodique, agissant comme une grille, et produisent ainsi le changement et la superposition de l'angle de réflexion avec celui de diffraction, et il en résulte une erreur de mesure. En outre, cet angle de réflexion dépend aussi de la direction de l'opération d'usinage de la surface, et celle-ci peut détourner l'angle de réflexion lorsque l'objet, pendant l'opération de mesure, n'est pas orienté constamment dans la même direction.

Enfin, lorsque la surface de l'objet n'est pas plane, l'angle de réflexion est dévié en suivant la perpendiculaire à cette surface au point touché par le rayon incident. La mesure d'une telle surface, par exemple d'une pièce cylindrique, devient ainsi difficile.

L'invention a pour but la réalisation d'un dispositif opto-électronique permettant des mesures dimensionnelles sans contact dépourvues des limites de celles obtenues par l'état de la technique précité.

A cet effet, le dispositif selon l'invention, du genre comprenant les éléments cités en début d'exposé, est caractérisé en ce qu'il comporte une optique composée d'au moins un élément collimateur pour redresser en un faisceau parallèle le faisceau en provenance de la source et d'un élément fléchissant apte à transformer le faisceau parallèle en un faisceau de rayons bidirectionnel, en soi parallèle, d'angle d'ouverture déterminé et constant, et en ce que la règle graduée, située dans un plan perpendiculaire à l'axe de l'optique, est constituée par un réseau d'éléments récepteurs photosensibles de type différentiel de constante donnée répartis symétriquement autour de l'axe de l'optique, la source, l'optique et la règle étant maintenues dans des positions relatives fixes dans un support approprié.

De la sorte, le dispositif opto-électronique ainsi constitué peut être placé au-dessus ou à l'intérieur d'un objet dont on veut mesurer l'éloignement et/ou la conformation géométrique de sa surface par détection de l'étendue et/ou de la forme de la trace des rayons réfléchis par cette surface sur les éléments photosensibles de la règle autour de l'axe de l'optique et par rapport à celui-ci.

Le principe de la mesure résultant de l'invention porte sur une triangulation effectuée avec des angles du triangle constants et sur une base formée par les éléments détecteurs de la règle, dans laquelle la longueur de la base est mesurée par la distance du rayon reflété de l'objet à l'axe de l'optique, en unités de grandeurs des éléments détecteurs photosensibles de la règle, ces derniers pouvant être de dimension très réduite.

Par l'utilisation d'une optique fléchissante, le dispositif produit une marque de mesure tridimensionnelle à rayonnement parallèle qui est détectée par les éléments récepteurs photosensibles de la règle formant une structure géométrique semblable, après réflexion de cette marque par la surface de l'objet. La grandeur de la marque de mesure reflétée sur le plan de la règle, constituée par la trace sur cette dernière des rayons réfléchis par l'objet, représente une grandeur fonction de la distance du dispositif à l'objet.

La forme et la constitution de la surface de l'objet influencent la géométrie de la trace de la marque reflétée sur la règle. La détection des écarts de la trace de la marque de mesure sur la règle par rapport à la géométrie idéale représentée par l'arrangement géométrique des éléments récepteurs photosensibles de celle-ci autour de l'axe de l'optique, permet de corriger les erreurs de mesure provoquées par l'aménagement de la surface de l'objet et/ou de fournir des données sur la forme de cette surface et de sa structure, ainsi que de sa périodicité.

L'invention sera bien comprise à l'aide du dessin et de la description qui suivent.

Le dessin représente, à titre d'exemples, deux formes d'exécution, une illustration des effets de l'invention, et quatre variantes de certains éléments de l'objet de l'invention.

La figure 1 est une vue d'ensemble schématique de la première forme d'exécution.

Les figures 2 et 3 sont respectivement une vue de dessous et une coupe axiale de l'élément optique de la première forme d'exécution.

La figure 4 est une vue de dessous de la règle de cette première forme d'exécution.

Les figures 5, 6 et 7 représentent trois situations de mesure différentes illustrant les effets de l'invention.

Les figures 8, 9, 10 et 11 sont des coupes axiales des quatre variantes.

La figure 12 est une vue de dessous de la troisième variante représentée figure 10.

La figure 13 est une coupe axiale schématique de la seconde forme d'exécution.

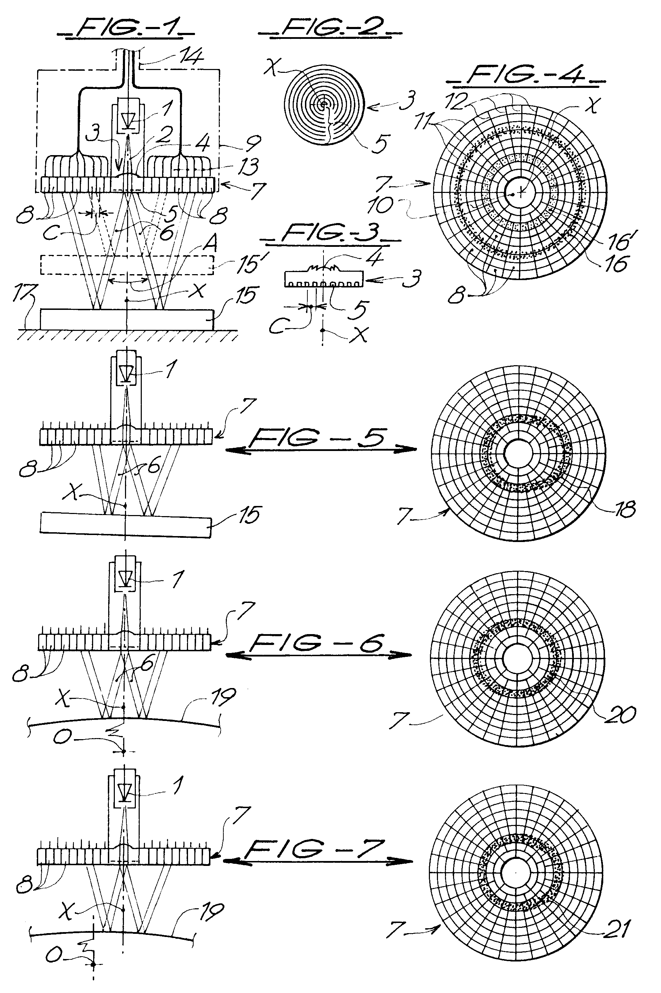

La première forme d'exécution représentée par les figures 1 à 4 comprend :
- une source de rayons électromagnétiques 1, telle que par exemple une diode, émettant un faisceau de rayons conique 2,
- une optique 3 pour calibrer le faisceau conique en provenance de la source 1, qui est composée d'un élément collimateur 4 pour redresser le faisceau conique en un faisceau parallèle et d'un élément fléchissant 5 apte à transformer le faisceau parallèle en un faisceau bidirectionnel 6, parallèle en soi, d'angle d'ouverture A déterminé et constant,
- et une règle 7, perpendiculaire à l'axe X de l'optique constituée par un réseau d'éléments récepteurs photosensibles 8, de type différentiel optimisé, de constante donnée C et répartis symétriquement autour de l'axe X de l'optique.

La source 1, l'optique 3 et la règle 7 sont maintenues dans des positions relatives fixes dans un support 9 approprié chaque fois au type de mesure à effectuer.

Dans cet ensemble, l'optique 3, détaillée figures 2 et 3, est constituée en une pièce transparente, réalisée par exemple en verre pressé, présentant du côté de la source 1 une lentille collimatrice 4, qui pourrait entre autres être formée par des lentilles Fresnel ou holographiques, et du côté opposé l'élément fléchissant 5 constitué ici par une grille circulaire présentant un réseau de phases de constante donnée C concentrique à l'axe X de cette optique.

La règle 7 se présente selon la figure 4 sous la forme d'un disque rond à trous intégrant ici l'optique dans un trou central 10 par lequel sort ainsi le faisceau 6 de rayons en provenance de la source 1. Sur ce disque, les éléments récepteurs photosensibles 8, par exemple des photodiodes, sont disposés en anneaux 11 concentriques à l'axe X de l'optique et selon une répartition linéaire de diamètres constituant un réseau dont la constante C est proportionnelle à celle de la grille phasée 5 et donnant la limite de mesure matérialisée du système.

Le cercle formé par l'ensemble des anneaux 11 de photodiodes 8 est divisé en secteurs égaux 12, de sorte que la règle 7 est ainsi réalisée par une disposition géométrique régulière de photodiodes, isolées électriquement les unes des autres, et qui peuvent être interrogées pièce à pièce. A ce dernier effet les photodiodes 8 sont reliées électriquement par des conducteurs individuels 13 et au travers d'un câble de liaison 14 au circuit électronique d'un calculateur, non représenté, de type propre à exploiter les effets de l'irradiation différenciée des photodiodes 8 pour quantifier la mesure. Les limites des structures de la règle permettent une interpolation, et les données de mesure des photodiodes 8 intégrées dans chaque anneau sont établies de manière à permettre une interpolation par anneaux, ces photodiodes étant à différences optimisées.

Le principe sur lequel est basée la mesure est illustré par les figures 1 et 4, et de manière plus étendue faisant ressortir ses avantages par les figures doubles 5, 6 et 7.

Afin de simplifier la présentation, l'objet à mesurer est un objet plan 15, représenté figure 1, d'épaisseur constante, situé sur une table de mesure plane 17. Le boîtier 9 du dispositif de mesure qui constitue en fait un palpeur sans contact, est placé à une distance donnée par rapport à la table 17 et est disposé de façon stable, et de manière à ce que la surface de l'objet et le cas échéant aussi la table 17 soient situées dans le champ de mesure de ce palpeur, et de manière à ce que l'axe optique X soit perpendiculaire au plan de la table 17 et, de ce fait, à la surface de l'objet 15.

Le faisceau incident bidirectionnel 6 émis par l'optique tombe sur la surface de l'objet et l'irradie circulairement. Le rayonnement est reflété par cette surface sous le même angle de réflexion A sur la règle 7, et la trace 16 de ce rayonnement reflété sur les éléments récepteurs photosensibles 8 de cette règle, représentée ombrée par de petits points sur la figure 4, est également un cercle du fait de la planéité de la surface irradiée de l'objet et de la perpendicularité de l'axe optique X sur cette surface. La règle 7 ayant un arrangement de photodiodes 8 de même structure de base géométrique que la grille phasée 5, chaque limitation d'un anneau 11 de photodiodes 8 représente une graduation de mesure. Pour faciliter la compréhension, un deuxième niveau de position 15' de la pièce 15 est représenté en pointillés sur la figure 1 ainsi que le cheminement des rayons correspondant à ce niveau, la trace du rayonnement correspondant à ce niveau sur la règle 7 étant représentée en 16' sur la figure 4.

Le cercle reflété 16 sur la règle irradie généralement des anneaux 11 de photodiodes d'une façon inégale. Une comparaison relative de l'intensité de ces anneaux permet une interpolation de la règle de mesure. La réalisation, l'utilisation et la documentation de la mesure se font à l'aide du calculateur auquel sont reliées les photodiodes 8.

Par ce principe, la grandeur de l'ouverture du faisceau incident bidirectionnel 6 à une hauteur quelconque sur l'axe X de l'optique, ici au niveau de la surface irradiée de l'objet 15, peut être mesurée par la règle 7, et cette ouverture est ici proportionnelle à la distance séparant la face sensible de cette règle de la surface irradiée de l'objet 15.

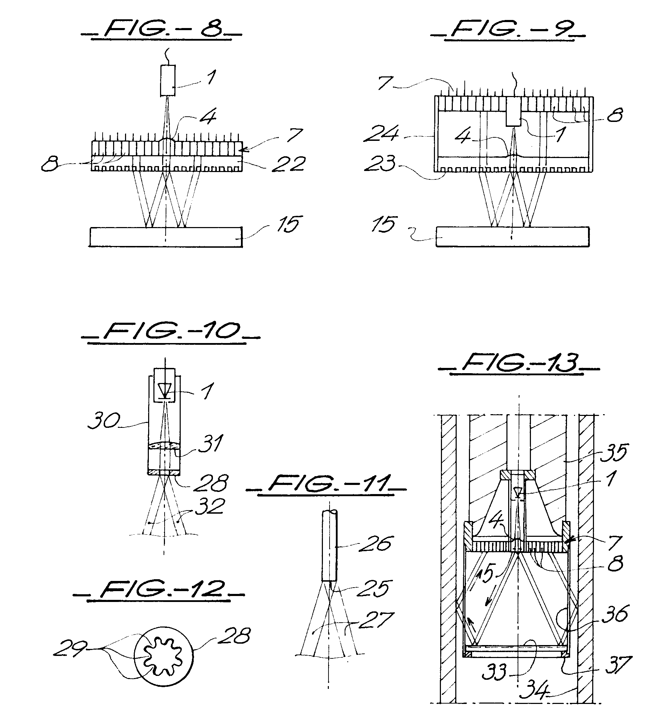

Lorsque l'objet plan 15 n'est pas situé perpendiculairement à l'axe optique X du dispositif, ce qui est illustré par la double figure 5, la forme reflétée du faisceau incident 6 est déformée. Par la réflexion, le défaut d'angle qui provoque la déformation est doublé et la trace du faisceau reflété se présente au niveau de la règle 7 sous la forme d'une ellipse 18 décentrée par rapport à l'axe de la structure de base de cette règle.

Dans ce cas, le rapport entre le grand et le petit axe de l'ellipse 18 permet de calculer l'angle d'inclinaison de l'objet 15, ce qui permet également de déterminer la distance de cet objet sur l'axe X de l'optique par intégration des grandeurs de ces deux axes.

Cette déformation en forme d'ellipse 18, rendue visuelle par exemple sur un écran associé au calculateur, permet aussi à l'opérateur de corriger le positionnement de l'objet et/ou du dispositif de mesure si nécessaire.

Dans le cas où la surface de l'objet à mesurer est devenue rugueuse lors de sa fabrication, cet état de surface se manifeste comme une grille à flexion supplémentaire. La trace sur la règle du rayonnement circulaire est déformée en ellipse, située au centre de la structure de base du détecteur. Dans ce cas le petit axe de l'ellipse représente la valeur de la distance entre l'objet et le dispositif.

Dans le cas où la surface de l'objet à mesurer est à la fois polie et rugueuse, cet état de surface se manifeste comme un écran éparpillé, et le faisceau bidirectionnel 6 parallèle en soi est dispersé. Dans ce cas la répartition de l'intensité au niveau des photodiodes 8 de la règle est normalement une répartition selon Gauss. De ce fait, la règle de mesure peut être interpolée au maximum de l'intensité et la distance peut être calculée en partant du diamètre moyen de la trace d'intensité maximale.

Lorsque l'objet à mesurer présente une surface à courbure en arc de cercle, comme par exemple la surface 19 d'un objet cylindrique dont l'axe de révolution O est perpendiculaire à l'axe X et sur ce dernier, comme cela est illustré par la figure 6, le faisceau de rayons reflété est dans ce cas reproduit au niveau de la règle 7 sous la forme d'une ellipse 20 centrée par rapport à la structure de base de celle-ci, étant donné que la surface de l'objet cylindrique agit comme une lentille cylindrique.

Partant de la géométrie analytique de la coupe du faisceau bidirectionnel 6, de forme conique, avec la surface cylindrique, on obtient ici :
- par la mesure du petit axe de l'ellipse la distance entre l'objet et le dispositif, par le profil d'intensité aux points de mesure, la rugosité périodique de la surface comme valeur de correction; le rapport des largeurs de l'ellipse aux points d'intersection de ses axes peut être analysé sous condition que le diamètre du cylindre connu permette la normalisation de la largeur dans le plan, ce qui permettrait ainsi de négliger la répartition dans le grand axe,
- selon le rapport de l'axe et de l'excentricité de l'ellipse, le diamètre de l'objet.

Dans le cas où l'axe de révolution O de l'objet cylindrique est bien perpendiculaire à l'axe X de l'optique mais par contre décentré par rapport à ce dernier, ce qui correspond à la situation de mesure représentée par la figure 7, le cône de rayons reflété sur la règle 7 donne sur celle-ci une trace de forme ellipsoïdale de largeurs inégales, du genre ovoïde 21, décentrée par rapport au centre de la structure des photodiodes 8.

Cette déformation ovoïdale 21, rendue visuelle ou analysée, permet a l'opérateur de centrer l'objet à mesurer en corrigeant sa position ou celle du dispositif. Lorsque l'axe de révolution O de l'objet ne se trouve pas perpendiculaire à l'axe X de l'optique, cela provoque un décentrage de petit axe de l'ellipse et une déformation par rapport à son grand axe. Ceci permet à l'opérateur ici également de positionner correctement l'objet jusqu'à obtenir une ellipse régulière bien centrée, comme sur la figure 6.

Des variantes pourront être apportées sans sortir du cadre de l'invention.

Ainsi par exemple, dans la variante représentée figure 8, une grille phasée 22, de même constitution que la grille 5, est étendue sous toute la surface de la règle 7, par rapport à la source 1, l'élément collimateur 4 étant pour sa part intégré dans le trou central de la règle 7. De la sorte, le rayonnement reflété par l'objet 15 est transformé par cette grille 22 en un faisceau cylindrique avant d'atteindre les éléments récepteurs photosensibles 8. Un tel faisceau présente ainsi l'avantage de tomber perpendiculairement sur ces éléments.

Dans la seconde variante représentée figure 9, la règle 7 et une grille phasée 23 sont maintenues espacées l'une de l'autre en positions parallèles dans un boîtier cylindrique 24. La source 1 est ici placée dans le trou central de la règle 7 et l'élément collimateur 4 vient de structure au centre de la grille 23, celle-ci étant de même étendue que la règle 7. Le rayonnement reflété par l'objet 15 est ici également transformé par la grille phasée 23 en un faisceau cylindrique avant d'atteindre les éléments récepteurs photosensibles 8.

Les grilles phasées telles que les grilles 5, 22 et 23 représentées, ont la propriété d'être complètement transparentes, de présenter peu de pertes de rayonnement et de ne pas refléter le rayonnement en retour vers la source 1. Selon une variante, on peut utiliser des grilles à réseau d'amplitudes, ce qui aurait l'avantage de permettre l'obtention d'une tache centrale lumineuse sur l'objet à mesurer, du fait que les réseaux d'amplitude ont un ordre zéro.

Cependant d'autres éléments fléchissants permettant des effets comparables peuvent être utilisés.

La troisième variante représentée figure 11 en est un exemple relativement simple, dans lequel l'élément fléchissant est constitué par l'extrémité libre 25 d'un conduit de lumière de très petit diamètre tel qu'une fibre de verre à saturation 26, apte à produire un faisceau de sortie 27 bidirectionnel semblable au faisceau 6 déjà défini, cette fibre étant en outre utilisée à la fois en tant que collimateur et conductrice des rayons émis par la source.

De même dans la variante représentée par les figures 10 et 12 dans laquelle l'élément fléchissant est constitué par un diaphragme 28 à ouverture en arêtes dentelées 29, situé à la partie inférieure d'un tube 30 contenant à sa partie supérieure la source 1 et entre deux un élément collimateur constitué par une lentille 31, le faisceau de sortie 32 étant bidirectionnel semblable également au faisceau 6.

Dans sa première forme d'exécution qui vient d'être décrite, et par son aptitude à mesurer des surfaces cylindriques, le dispositif peut sans autres modifications être également utilisé pour mesurer par exemple un alésage.

Dans cette utilisation, le dispositif est fixé dans un support approprié à permettre son introduction dans l'alésage de telle manière que son axe optique X soit orienté radialement dans celui-ci et maintenu en regard de sa paroi. De la sorte, par rotation du dispositif autour d'un axe parallèle à l'axe de révolution de l'alésage et perpendiculaire à l'axe optique X, il est possible en un premier temps de placer cet axe de rotation sur celui de l'alésage, par examen de l'image projetée sur la règle et ensuite en un deuxième temps de déterminer le diamètre de l'alésage, sa géométrie, et si besoin est d'analyser son état de surface.

Mais il est possible de procéder encore plus simplement et dans un espace plus restreint avec un dispositif arrangé selon la seconde forme d'exécution représentée figure 13.

Dans cette seconde forme d'exécution, dont la structure de base est constituée de la même manière que dans la première forme d'exécution avec la source 1, l'optique à collimateur 4 et à grille de phases 5, et une règle 7 à réseau de photodiodes 8, l'optique du dispositif comporte en outre un miroir 33, ici plan, perpendiculaire à son axe, placé à une distance prédéterminée de l'élément fléchissant 5 pour pouvoir irradier la surface latérale intérieure cylindrique 34 d'un objet telle que celle d'un alésage, dont les génératrices sont parallèles audit axe, via la règle 7 par réflexion de ladite surface.

Ce dispositif est placé dans un boîtier cylindrique 35 comportant un prolongement également cylindrique dont la paroi latérale 36 est transparente et dont le fonds 37 soutient le miroir 33, prolongement qui peut aussi être formé par un ou des piliers.

D'une façon générale et pour tous les dispositifs réalisés selon l'enseignement de l'invention, afin de supprimer l'influence néfaste de l'éclairage ambiant sur les éléments photosensibles de la règle, une source de rayons monochromatiques telle que par exemple une diode IR peut être utilisée préférentiellement. Dans ce cas, la règle est munie d'un filtre ne laissant passer que ce rayonnement. Une autre possibilité consiste à moduler la fréquence de l'intensité de la source, cette fréquence étant choisie différente de celle du réseau. Le traitement des signaux à tension alternative permet par ailleurs une relation plus avantageuse entre signaux et bruits.

Pour la réalisation de certaines tâches de mesure, le dispositif peut être arrangé de telle sorte que le rayonnement de la source soit transmis au moyen d'une fibre de verre à l'endroit de mesure et que la grille de phase soit fixée en bout de cette fibre de verre, et que le rayonnement reflété de l'objet soit intégré dans d'autres fibres de verre transmettant le rayonnement aux photodétecteurs. Dans un tel arrangement la structure géométrique de la règle telle que décrite doit être reprise de la géométrie de l'assemblage des fibres de verre. Autour des fibres de verre centrales de la source seront disposés concentriquement des faisceaux de fibres de verre qui, sous forme de faisceaux séparés, iront aux photodétecteurs de la règle. Les fibres de verre de deux faisceaux annulaires voisins seront disposées en sorte que la zone obscure entre eux reste petite.

En ce qui concerne l'arrangement géométrique des éléments photosensibles 8 de la règle, la figure de fléchissement d'une grille croisée avec un arrangement rectangulaire de ces éléments constitue une autre variante possible. Dans ce cas, ladite grille à ligne de photodétecteurs ne peut que détecter deux points mais permet toutefois une mesure des distances entre la pièce à mesurer et le dispositif.

En outre, pour éliminer les effets éventuellement gênants de la lumière ambiante, il est possible de réaliser les grilles circulaires 22 et 23 en matière filtrante.

Enfin, les éléments récepteurs photosensibles de la règle peuvent être disposés selon différents codes binaires. Ils pourraient également être constitués par des éléments connus sous le nom "Position Sensible Detector".

## Revendications

1. Dispositif opto-électronique de mesure de dimensions, comprenant une source de rayons électromagnétiques, une optique pour calibrer les rayons en provenance de la source, une règle graduée irradiée par les rayons calibrés et des éléments récepteurs photosensibles destinés à être reliés à un circuit électronique ayant pour fonction de quantifier la mesure par exploitation des effets de l'irradiation de la règle sur eux, caractérisé en ce qu'il comporte une optique composée d'au moins un élément collimateur (4, 26) pour redresser en un faisceau parallèle le faisceau en provenance de la source et d'un élément fléchissant (5, 28, 25) apte à transformer le faisceau parallèle en un faisceau de rayons bidirectionnel, en soi parallèle, d'angle d'ouverture (A) déterminé et constant, et en ce que la règle graduée (7), située dans un plan perpendiculaire à l'axe (X) de l'optique, est constituée par un réseau d'éléments récepteurs photosensibles de type différentiel (8) de constante donnée, répartis symétriquement autour de l'axe de l'optique, la source, l'optique et la règle étant maintenues dans des positions relatives fixes dans un support approprié, de sorte que le dispositif ainsi constitué peut être placé au-dessus ou à l'intérieur d'un objet dont on veut mesurer l'éloignement et/ou la conformation géométrique de sa surface par détection de l'étendue et/ou de la forme de la trace des rayons réfléchis par cette surface sur les éléments photosensibles de la règle autour de l'axe de l'optique et par rapport à celui-ci.

2. Dispositif selon la revendication 1, caractérisé en ce que l'élément fléchissant de l'optique est constitué par une grille circulaire transparente (5, 22, 23) présentant un réseau de phases de constante donnée concentriques à l'axe de l'optique.

3. Dispositif selon la revendication 1, caractérisé en ce que l'élément fléchissant de l'optique est constitué par un diaphragme (28) à arêtes dentelées.

4. Dispositif selon la revendication 1, caractérisé en ce que l'élément fléchissant de l'optique est constitué par l'extrémité d'une fibre de verre à saturation (26), celle-ci étant utilisée à la fois en tant que collimateur et conductrice des rayons émis par la source.

5. Dispositif selon la revendication 1, caractérisé en ce que les éléments récepteurs photosensibles (8) de la règle (7) sont disposés en anneaux (11) concentriques à l'axe de l'optique et selon une répartition linéaire de diamètres constituant un réseau.

6. Dispositif selon la revendication 5, caractérisé en ce que les anneaux (11) d'éléments récepteurs photosensibles de la règle (7) sont divisés radialement en secteurs (12).

7. Dispositif selon les revendications 1, 2 et 5, caractérisé en ce que la constante du réseau de phases de la grille (5) et la constante du réseau d'éléments récepteurs photosensibles de la règle (7) sont proportionnelles.

8. Dispositif selon la revendication 1, caractérisé en ce que l'optique (5) est intégrée à la règle (7) dans un logement central (10) de celle-ci.

9. Dispositif selon les revendications 1, 2 et 5, caractérisé en ce que la grille transparente (22, 23) est étendue sur toute la surface de la règle (7).

10. Dispositif selon la revendication 1, caractérisé en ce que l'optique comporte en outre un miroir (33) perpendiculaire à son axe, placé à une distance prédéterminée de l'élément fléchissant (5) pour irradier une surface intérieure cylindrique d'un objet dont les génératrices sont parallèles audit axe, via la règle par réflexion de ladite surface.
